# EUROPÄISCHE PATENTSCHRIFT

(11) **EP 4 351 905 B1**
(45) Veröffentlichungstag und Bekanntmachung des Hinweises auf die Patenterteilung: **25.12.2024**
(21) Anmeldenummer: 22728429.6
(22) Anmeldetag: 09.05.2022
(51) Int. Cl.: B60K 1/00, F16H 3/091

(54) **ANTRIEBSANORDNUNG**
DRIVE ARRANGEMENT
AGENCEMENT D'ENTRAÎNEMENT

(30) Priorität: 10.06.2021 DE 102021205870
(43) Veröffentlichungstag der Anmeldung: 17.04.2024
(73) Patentinhaber: Robert Bosch GmbH, 70442 Stuttgart (DE)
(72) Erfinder: SCHLITTENBAUER, Tobias, 71679 Asperg (DE); JUNG, Philipp, 74321 Bietigheim-Bissingen (DE)
(86) Internationale Anmeldenummer: PCT/EP2022/062459
(87) Internationale Veröffentlichungsnummer: WO 2022/258272

(56) Entgegenhaltungen:
- EP-A1- 2 532 546
- WO-A1-2020/164987
- DE-A1- 102018 129 931
- KR-A- 20210 047 136
- US-A1- 2016 017 958

## Beschreibung

### Stand der Technik

Die Erfindung betrifft eine Antriebsanordnung gemäß dem Oberbegriff von Anspruch 1.

DE 10 2018 113 173 A1 offenbart eine Getriebeanordnung für ein Elektrofahrzeug mit einem elektrisch schaltbaren Zweigang-Getriebe. Die Getriebeanordnung weist eine erste Welle und eine Abtriebswelle auf. Die erste Welle weist Zahnräder und eine dazwischen angeordnete Führungskontur auf. Auf der Abtriebswelle sind zwei Losräder angeordnet, die jeweils mit einem der Zahnräder kämmen, sowie eine Schaltstange, die zum Schalten in eine erste und eine zweite Gangstellung hin und her verschiebbar ist. Insbesondere die Übersetzung des ersten Gangs ist durch die zwei Übersetzungsstufen jedoch begrenzt.

Eine Antriebsanordnung für ein Fahrzeug, mit einer elektrischen Maschine und einem zweistufigen Stirnradgetriebe, ist aus der DE 10 2018 129 931 A1 bekannt.

### Offenbarung der Erfindung

Das der Erfindung zugrunde liegende Problem wird durch eine Antriebsanordnung mit den Merkmalen des Anspruchs 1 gelöst. Vorteilhafte Weiterbildungen der Erfindung sind in den Unteransprüchen genannt.

Die (elektrische) Antriebsanordnung ist insbesondere als Antriebsanordnung für ein Fahrzeug eingerichtet und/oder bestimmt. Die Antriebsanordnung umfasst eine elektrische Maschine und ein zweistufiges Stirnradgetriebe. Das Stirnradgetriebe weist eine Eingangswelle, eine Zwischenwelle, eine Seitenwelle und eine Ausgangswelle auf. Die elektrische Maschine ist mit der Eingangswelle verbunden, so dass die Eingangswelle durch die elektrische Maschine angetrieben werden kann. Die Eingangswelle, die Zwischenwelle, die Seitenwelle und die Ausgangswelle sind über Stirnradstufen derart getrieblich miteinander gekoppelt, dass bei einem Antrieb durch die elektrische Maschine in einer ersten Schaltstufe (erster Gang) die Eingangswelle über die Seitenwelle und die Zwischenwelle ein Drehmoment auf die Ausgangswelle überträgt und dass in einer zweiten Schaltstufe (zweiter Gang) die Eingangswelle (ohne Seitenwelle) über die Zwischenwelle ein Drehmoment direkt auf die Ausgangswelle überträgt. Mit anderen Worten wird die Seitenwelle in der zweiten Schaltstufe umgangen.

Mit einem zweistufigen Stirnradgetriebe (zwei Gänge) kann eine kleinere elektrische Maschine zur Abdeckung der Antriebsanforderungen eingesetzt werden. Die elektrische Maschine kann häufiger im Bereich höherer Wirkungsgrade betrieben werden. Dies trägt zu einer kompakten Ausgestaltung und einem effizienten Betrieb der Antriebsanordnung bei. Zudem kann ein vergleichsweise großer Übersetzungsbereich (große Spreizung) abgedeckt werden, da in der ersten Schaltstufe der Lastfluss über alle vier Wellen (inklusive der Seitenwelle) geleitet wird, in der zweiten Schaltstufe hingegen wird der Lastfluss nur über drei Wellen geleitet (Seitenwelle wird umgangen).

Die Antriebsanordnung kann somit in Fahrzeugen zur Anwendung kommen, in welchen eine hohe Übersetzung im ersten Gang gefordert wird, welche mit zwei Stirnradstufen nicht darstellbar ist (bspw. Übersetzungsverhältnis i > 16). Hier stellt die vorgeschlagene Antriebsanordnung eine äußerst kompakte Lösung dar. Die Antriebsanordnung kann bspw. in einem Geländewagen zum Einsatz kommen, welcher durch eine hoch übersetzte erste Schaltstufe (erster Gang) extreme Steigfähigkeiten erreichen kann.

Die vorgeschlagene (elektrische) Antriebsanordnung kann als elektrische Achse oder als Teil einer elektrischen Achse (E-Achse) in einem teilelektrisch oder vollelektrisch betriebenen Fahrzeug, bspw. einem PKW, einem SUV oder einem Geländewagen zum Einsatz kommen.

Die Antriebsanordnung kann ein Gehäuse umfassen, in dem die elektrische Maschine und das Stirnradgetriebe zumindest teilweise, vorzugsweise vollständig, angeordnet bzw. eingefasst sind.

Die Eingangswelle, die Zwischenwelle, die Seitenwelle und/oder die Ausgangswelle können in der Antriebsanordnung jeweils mittels Wälzlagern relativ zu einer Basis, bspw. einem Gehäuse der Antriebsanordnung, drehbar gelagert sein. Unabhängig davon kann es sich bei der Eingangswelle um die Rotorwelle der elektrischen Maschine oder um eine hiervon separate Welle handeln, die drehfest mit der Rotorwelle der elektrischen Maschine gekoppelt ist. Gemäß einer Weiterbildung können die Eingangswelle und die Ausgangswelle derart miteinander gekoppelt sein, dass bei einem Antrieb durch die elektrische Maschine in identischer Drehrichtung die Ausgangswelle in der ersten Schaltstufe in einer ersten Drehrichtung angetrieben wird und in der zweiten Schaltstufe entgegengesetzt zur ersten Drehrichtung angetrieben wird. Mit anderen Worten ergibt sich eine umgekehrte Drehrichtung der Ausgangswelle in den beiden Schaltstufen bei identischer Drehrichtung der elektrischen Maschine bzw. der Eingangswelle. In der ersten Schaltstufe kann sich die Ausgangswelle gegensinnig zur Eingangswelle drehen. In der zweiten Schaltstufe kann sich die Ausgangswelle gleichsinnig zur Eingangswelle drehen.

Gemäß einer Weiterbildung kann die Seitenwelle zwischen der Eingangswelle und der Zwischenwelle oder zwischen der Zwischenwelle und der Abtriebswelle angeordnet sein. Dies erlaubt bei im Wesentlichen gleicher Funktionsweise eine flexible Anordnung der Zwischenwelle, bspw. um unterschiedlichen Bauraumanforderungen gerecht zu werden.

Erfindungsgemäß weist die erste Schaltstufe (erster Gang) eine erste Stirnradstufe mit einem ersten Ritzel und einem mit dem ersten Ritzel kämmenden ersten Zahnrad auf, wobei das erste Ritzel drehbar oder drehfest mit der Eingangswelle gekoppelt und/oder auf der Eingangswelle angeordnet ist und wobei das erste Zahnrad drehfest oder drehbar mit der Seitenwelle gekoppelt und/oder auf der Seitenwelle angeordnet ist. Hiermit lässt sich mit konstruktiv einfachen Mitteln eine zuverlässige Stirnradstufe realisieren.

Erfindungsgemäß weist die erste Schaltstufe (erster Gang) eine zweite Stirnradstufe mit einem zweiten Ritzel und einem mit dem zweiten Ritzel kämmenden zweiten Zahnrad auf, wobei das zweite Ritzel drehbar oder drehfest mit der Seitenwelle gekoppelt und/oder auf der Seitenwelle angeordnet ist und wobei das zweite Zahnrad drehfest oder drehbar mit der Zwischenwelle gekoppelt ist und/oder drehbar auf der Zwischenwelle gelagert ist. Auch hiermit lässt sich mit konstruktiv einfachen Mitteln eine zuverlässige Stirnradstufe realisieren. Das zweite Zahnrad ist als Festrad oder als Losrad auf der Zwischenwelle angeordnet, was eine Schaltbarkeit begünstigt.

Optional kann die erste Schaltstufe (erster Gang), d.h. die erste Stirnradstufe und die zweite Stirnradstufe, geradverzahnt ausgebildet sein (Ritzel und Zahnrad der ersten und zweiten Stirnradstufe jeweils geradverzahnt). Dadurch können, bspw. bei seltener Benutzung bzw. geringer Einsatzdauer der ersten Schaltstufe, die auf die betreffenden Wälzlager wirkenden Lagerkräfte minimiert und die Antriebsanordnung damit weiter vereinfacht werden.

Erfindungsgemäß weist die zweite Schaltstufe (zweiter Gang) eine dritte Stirnradstufe mit einem dritten Ritzel und einem mit dem dritten Ritzel kämmenden dritten Zahnrad auf, wobei das dritte Ritzel drehbar oder drehfest mit der Eingangswelle gekoppelt und/oder auf der Eingangswelle angeordnet ist und wobei das dritte Zahnrad drehfest oder drehbar mit der Zwischenwelle gekoppelt und/oder drehbar auf der Zwischenwelle gelagert ist. Auch hiermit lässt sich mit konstruktiv einfachen Mitteln eine zuverlässige Stirnradstufe realisieren. Das dritte Zahnrad ist als Festrad oder als Losrad auf der Zwischenwelle angeordnet, was eine Schaltbarkeit begünstigt.

Erfindungsgemäß ist auf der Zwischenwelle eine mittels eines Aktuators betätigbare Schalteinrichtung angeordnet, wobei mittels der Schalteinrichtung in einer ersten Schaltstellung (erster Gang) das zweite Zahnrad, welches bei dieser Ausgestaltung drehbar mit der Zwischenwelle gekoppelt ist, drehfest mit der Zwischenwelle koppelbar ist und/oder wobei mittels der Schalteinrichtung in einer zweiten Schaltstellung (zweiter Gang) das dritte Zahnrad, welches bei dieser Ausgestaltung drehbar mit der Zwischenwelle gekoppelt ist, drehfest mit der Zwischenwelle koppelbar ist. Dadurch kann mit einfachen konstruktiven Mitteln ein Umschalten zwischen den verschiedenen Schaltstufen bzw. Gängen erfolgen. Es ist lediglich eine Schalteinrichtung erforderlich, was eine Bauweise mit einer geringen Anzahl von Komponenten begünstigt.

Die Schalteinrichtung oder Schalteinrichtungen können jeweils ein Schaltelement, bspw. eine Schaltmuffe, aufweisen, welches drehfest mit der betreffenden Welle (Eingangswelle, Seitenwelle oder Zwischenwelle) gekoppelt, jedoch entlang der Mittellängsrichtung der betreffenden Welle (Eingangswelle, Seitenwelle oder Zwischenwelle) verschieblich ist. Der Aktuator kann als hydraulischer, elektromotorischer oder elektromagnetischer Aktuator ausgebildet sein. Optional kann an der Schalteinrichtung eine Synchronisiereinrichtung zum Ausgleich von Drehzahldifferenzen angeordnet sein. Dadurch lassen sich die Schaltzeiten zwischen den Schaltstufen verkürzen.

Erfindungsgemäß weist das Stirnradgetriebe eine vierte Stirnradstufe (Endübersetzung bzw. "Final Drive") mit einem vierten Ritzel und einem mit dem vierten Ritzel kämmenden vierten Zahnrad auf, wobei das vierte Ritzel drehfest mit der Zwischenwelle gekoppelt und/oder auf der Zwischenwelle angeordnet ist und wobei das vierte Zahnrad drehfest mit der Ausgangswelle gekoppelt und/oder auf der Ausgangswelle angeordnet ist. Hiermit kann mit einfachen konstruktiven Mitteln eine Stirnradstufe für eine Endübersetzung bereitgestellt werden.

Gemäß einer Weiterbildung kann die elektrische Maschine derart eingerichtet sein, dass diese in der ersten Schaltstufe in einer anderen Drehrichtung angetrieben wird als in der zweiten Schaltstufe. Dadurch kann ein Antrieb der Ausgangswelle unabhängig von der gewählten Schaltstufe in die gleiche Drehrichtung erfolgen. Insbesondere bei moderaten Anforderungen an die Schaltzeiten stellt die an sich unterschiedliche Drehrichtung in beiden Schaltstufen bzw. Gängen kein Problem dar, da die elektrische Maschine während des Schaltvorgangs abgebremst und in umgekehrte Drehrichtung beschleunigt wird, bevor die andere Schaltstufe eingelegt wird. Wie bereits angedeutet, kann eine Synchronisierenrichtung an der Schalteinrichtung dabei behilflich sein, Drehzahldifferenzen auszugleichen.

Gemäß einer Weiterbildung kann die Ausgangswelle ein Differential aufweisen.

Dies begünstigt einen Achsantrieb eines Fahrzeugs durch die Antriebsanordnung, da bspw. durch Kurvenfahrt bedingte Drehzahldifferenzen an durch die Antriebsanordnung antreibbaren oder angetriebenen Rädern (Antriebsräder) ausgeglichen werden können. Die Antriebsräder des Fahrzeugs können mittels Abtriebswellen mit dem Differential gekoppelt sein.

Gemäß einer Weiterbildung kann das Stirnradgetriebe eine Parksperre aufweisen, wobei die Parksperre auf der Eingangswelle, auf der Zwischenwelle oder auf der Ausgangswelle angeordnet sein kann. Dadurch kann mit einfachen knstruktiven Mitteln eine Parksperrenfunktion realisiert werden. Die Parksperre kann ein bspw. verzahntes Parksperrenrad und eine Parksperrenklinke aufweisen, die zum Blockieren des Parksperrenrades mit dem Parksperrenrad in Eingriff bringbar ist. Das Parksperrenrad kann drehfest an einer der genannten Wellen befestigt sein. Die Parksperrenklinke kann an einer Basis der Antriebsanordnung, bspw. an einem Gehäuse der Antriebsanordnung, befestigt sein. Die Parksperrenklinke ist zwischen einer Freigabestellung und Blockierstellung verlagerbar.

Nachfolgend werden mögliche Ausführungsformen der Erfindung unter Bezugnahme auf die beiliegenden Zeichnungen erläutert. Es zeigen:
- Fig.1: eine Antriebsanordnung in einer perspektivischen Ansicht;
- Fig.2: eine schematische Ansicht der Antriebsanordnung aus Fig. 1 mit Darstellung des Lastflusses in der ersten Schaltstufe; und
- Fig.3: eine schematische Ansicht der Antriebsanordnung aus Fig. 1 mit Darstellung des Lastflusses in der zweiten Schaltstufe.

Eine Antriebsanordnung trägt in den Figuren insgesamt das Bezugszeichen 10. Die Antriebsanordnung 10 weist eine elektrische Maschine 12 und ein zweistufiges Stirnradgetriebe 14 auf.

Das Stirnradgetriebe 14 weist eine Eingangswelle 16, eine Zwischenwelle 18, eine Seitenwelle 20 und eine Ausgangswelle 22 auf, die im Beispiel parallel zueinander orientiert sind. Die genannten Wellen sind jeweils mittels Wälzlagern 24 drehbar an der Antriebsanordnung 10, insbesondere an einem (nicht gezeigten) Gehäuse der Antriebsanordnung 10, gelagert. Bei den Wälzlagern 24 kann sich um Kugellager, Rollenlager oder Kegellager handeln.

Die elektrische Maschine 12 ist mit der Eingangswelle 16 verbunden, so dass die Eingangswelle 16 durch die elektrische Maschine 12 drehend angetrieben werden kann. Bei der Eingangswelle 16 kann es sich um eine bezogen auf die Rotorwelle (nicht gezeigt) der elektrischen Maschine 12 separate Welle handeln, die drehfest mit der Rotorwelle verbunden ist. Im Beispiel ist die Seitenwelle 20 zwischen der Eingangswelle 16 und der Zwischenwelle 18 angeordnet.

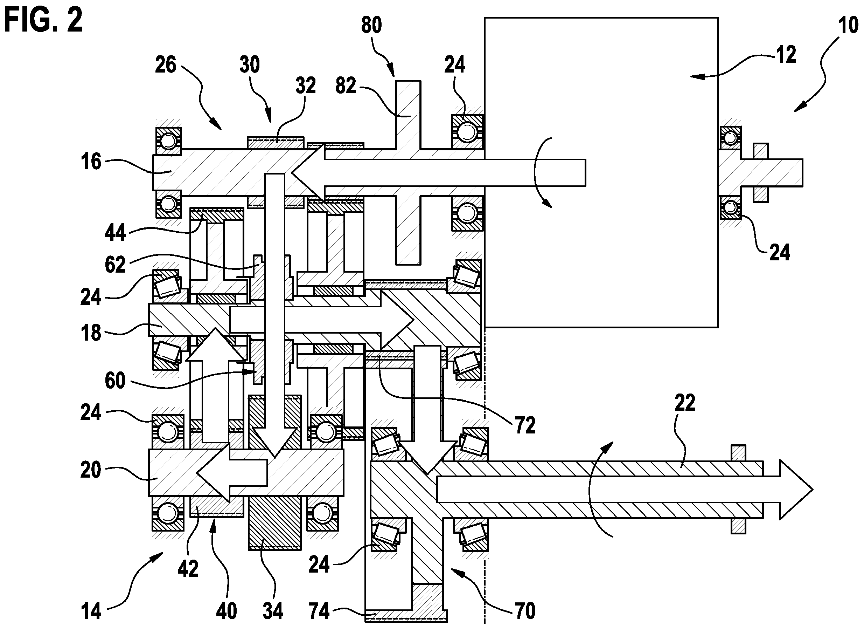

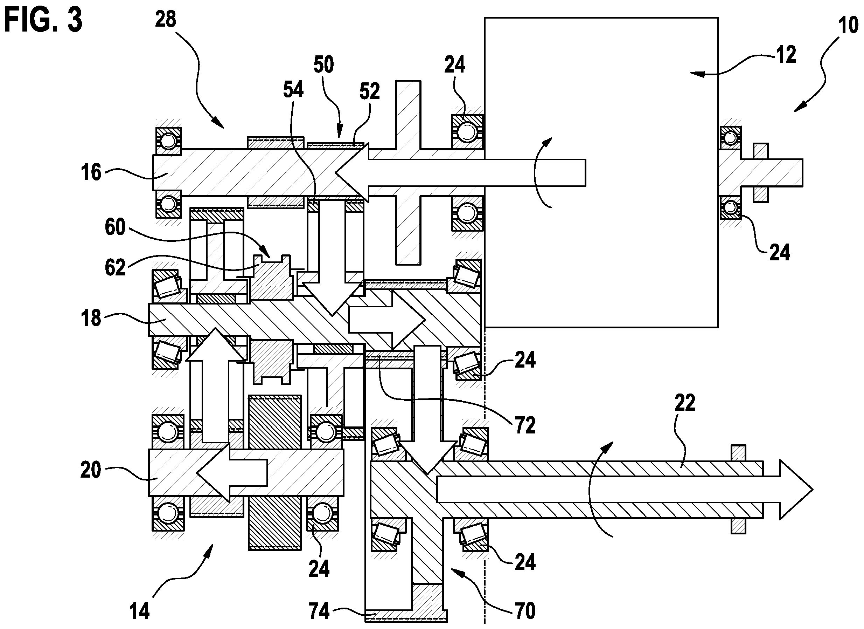

Die Eingangswelle 16, die Zwischenwelle 18, die Seitenwelle 20 und die Ausgangswelle 22 sind über Stirnradstufen derart getrieblich miteinander gekoppelt, dass bei einem Antrieb durch die elektrische Maschine 12 in einer ersten Schaltstufe 26 die Eingangswelle 16 über die Seitenwelle 20 und die Zwischenwelle 18 ein Drehmoment auf die Ausgangswelle 22 überträgt (vgl. Fig.2) und dass in einer zweiten Schaltstufe 28 die Eingangswelle 16 über die Zwischenwelle 18 ein Drehmoment direkt auf die Ausgangswelle 22 überträgt (vgl. Fig.3; Seitenwelle 20 wird umgangen).

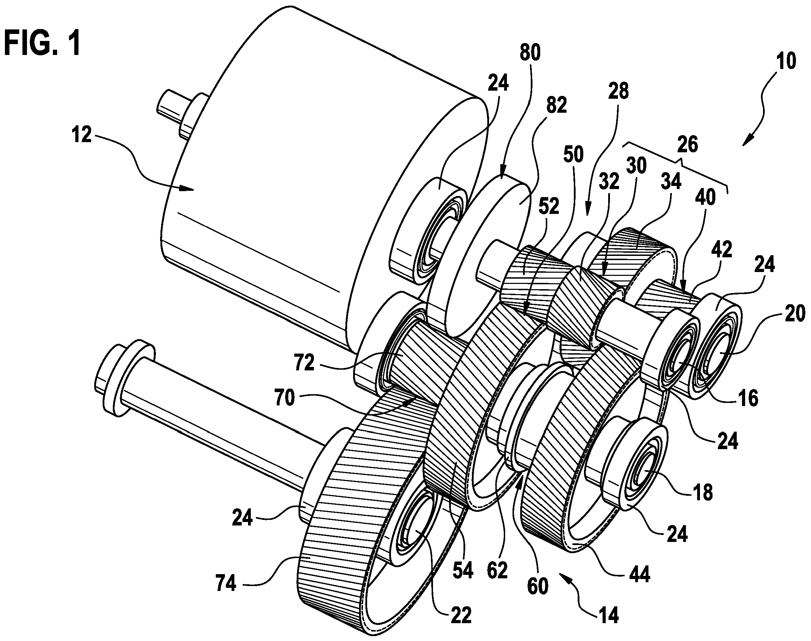

Die Eingangswelle 16 und die Ausgangswelle 22 sind im Beispiel derart miteinander gekoppelt, dass bei einem Antrieb durch die elektrische Maschine 12 in identischer Drehrichtung die Ausgangswelle 22 in der ersten Schaltstufe 26 in einer ersten Drehrichtung angetrieben wird und in der zweiten Schaltstufe 28 entgegengesetzt zur ersten Drehrichtung angetrieben wird (vgl. Fig.1).

Die erste Schaltstufe 26 weist eine erste Stirnradstufe 30 mit einem ersten Ritzel 32 und einem mit dem ersten Ritzel 32 kämmenden ersten Zahnrad 34 auf. Das erste Ritzel 32 ist drehfest mit der Eingangswelle 16 gekoppelt und auf der Eingangswelle 16 angeordnet. Das erste Zahnrad 34 ist drehfest mit der Seitenwelle 20 gekoppelt und auf der Seitenwelle 20 angeordnet. Das erste Zahnrad 34 weist im Beispiel einen größeren Durchmesser als das erste Ritzel 32 auf.

Die erste Schaltstufe 26 weist eine zweite Stirnradstufe 40 mit einem zweiten Ritzel 42 und einem mit dem zweiten Ritzel 42 kämmenden zweiten Zahnrad 44 auf. Das zweite Ritzel 42 ist drehfest mit der Seitenwelle 20 gekoppelt und auf der Seitenwelle 20 angeordnet. Das zweite Zahnrad 44 ist drehbar mit der Zwischenwelle 18 gekoppelt und drehbar auf der Zwischenwelle 18 gelagert (Losrad). Das zweite Ritzel 42 weist im Beispiel einen kleineren Durchmesser als das erste Zahnrad 34 und/oder das zweite Zahnrad 44 auf.

Die zweite Schaltstufe 28 weist eine dritte Stirnradstufe 50 mit einem dritten Ritzel 52 und einem mit dem dritten Ritzel 52 kämmenden dritten Zahnrad 54 auf. Das dritte Ritzel 52 ist drehfest mit der Eingangswelle 16 gekoppelt und auf der Eingangswelle angeordnet. Das dritte Zahnrad 54 ist drehbar mit der Zwischenwelle 18 gekoppelt und drehbar auf der Zwischenwelle 18 gelagert (Losrad). Das dritte Zahnrad 54 weist im Beispiel einen größeren Durchmesser als das dritte Ritzel 52 auf.

Auf der Zwischenwelle 18 ist eine mittels eines (nicht gezeigten) Aktuators betätigbare Schalteinrichtung 60 angeordnet. Mittels der Schalteinrichtung 60 ist in einer ersten Schaltstellung (erster Schaltstufe 26 eingelegt) das zweite Zahnrad 44 drehfest mit der Zwischenwelle 18 koppelbar bzw. gekoppelt (vgl. Fig.2). Zudem ist mittels der Schalteinrichtung 60 in einer zweiten Schaltstellung (zweite Schaltstufe 28 eingelegt) das dritte Zahnrad 54 drehfest mit der Zwischenwelle 18 koppelbar bzw. gekoppelt (vgl. Fig.3).

Die Schalteinrichtung 60 weist im Beispiel ein Schaltelement 62, bspw. eine Schaltmuffe, auf, welches drehfest mit der Zwischenwelle 18 gekoppelt, jedoch entlang der Mittellängsrichtung der Zwischenwelle 18 verschieblich geführt ist (vgl. Fig.1). Unabhängig davon kann der (nicht gezeigte) Aktuator als hydraulischer, elektromotorischer oder elektromagnetischer Aktuator ausgebildet sein. Optional kann an der Schalteinrichtung 60 eine Synchronisiereinrichtung zum Ausgleich von Drehzahldifferenzen angeordnet sein, wie oben erläutert.

Das Stirnradgetriebe 12 weist eine vierte Stirnradstufe 70 mit einem vierten Ritzel 72 und einem mit dem vierten Ritzel 72 kämmenden vierten Zahnrad 74 auf. Das vierte Ritzel 72 ist drehfest mit der Zwischenwelle 18 gekoppelt und auf der Zwischenwelle 18 angeordnet. Das vierte Zahnrad 74 ist drehfest mit der Ausgangswelle 22 gekoppelt und auf der Ausgangswelle 22 angeordnet. Das vierte Zahnrad 74 weist im Beispiel einen größeren Durchmesser als das vierte Ritzel 72 auf.

Die elektrische Maschine 12 ist derart eingerichtet, dass diese in der ersten Schaltstufe 26 in einer anderen Drehrichtung angetrieben wird als in der zweiten Schaltstufe 28 (vgl. Fig.2 und 3). Dadurch erfolgt ein Antrieb der Ausgangswelle 22 unabhängig von der gewählten Schaltstufe in die gleiche Drehrichtung (vgl. Fig.2 und 3).

Optional kann die Ausgangswelle ein Differential aufweisen, wie oben erläutert (nicht gezeigt). Das Stirnradgetriebe 14 weist eine Parksperre 80 auf, wobei die Parksperre 80 im Beispiel auf der Eingangswelle 16 angeordnet ist (andere Anordnung ebenfalls denkbar, s.o.). Die Parksperre 80 weist ein bspw. verzahntes, drehfest mit der Eingangswelle 16 verbundenes Parksperrenrad 82 und eine Parksperrenklinke auf (nicht gezeigt), die zum Blockieren des Parksperrenrades 82 mit dem Parksperrenrad 82 in Eingriff bringbar ist.

Fig.2, auf die bereits teilweise Bezug genommen wurde, zeigt eine schematische Ansicht der Antriebsanordnung 10 aus Fig.1 mit Darstellung des Lastflusses in der ersten Schaltstufe 26. Zur besseren Übersichtlichkeit sind die Eingangswelle 16 und die Seitenwelle 20 getrennt voneinander dargestellt, wobei diese bei der Antriebsanordnung 10 miteinander kämmen (vgl. Fig.1).

Wie in Fig.2 veranschaulicht, wird der Lastfluss in der ersten Schaltstufe 26 (erster Gang) über drei Stirnradstufen 30, 40, 70 und damit über alle vier Wellen 16, 18, 20, 22 geleitet. Dabei ist das Schaltelement 62 der Schalteinrichtung 60 in die erste Schaltstellung gebracht (in Fig.2 nach links geschoben), so dass das zweite Zahnrad 44 (Losrad) drehfest mit der Zwischenwelle 18 gekoppelt ist. Bei einem Antrieb der elektrischen Maschine 12 wird somit ein Drehmoment von der Eingangswelle 16 über die erste Stirnradstufe 30 der ersten Schaltstufe 26 auf die Seitenwelle 20 der ersten Schaltstufe 26 und von dort über die zweite Stirnradstufe 40 der ersten Schaltstufe 26 auf die Zwischenwelle 18 übertragen. Über die vierte Stirnradstufe 70 wird schließlich die Ausgangswelle 22 angetrieben.

Fig.3, auf die ebenfalls bereits teilweise Bezug genommen wurde, zeigt eine schematische Ansicht der Antriebsanordnung 10 aus Fig.1 mit Darstellung des Lastflusses in der zweiten Schaltstufe 18. Auch hier sind zur besseren Übersichtlichkeit die Eingangswelle 16 und die Seitenwelle 20 getrennt voneinander dargestellt, wobei diese bei der Antriebsanordnung 10 miteinander kämmen (vgl. Fig.1).

Wie in Fig.3 veranschaulicht, wird der Lastfluss in der zweiten Schaltstufe 28 (zweiter Gang) über zwei Stirnradstufen 50, 70 und damit über lediglich drei Wellen 16, 18, 22 geleitet. Dabei ist das Schaltelement 82 der Schalteinrichtung 80 in die zweite Schaltstellung gebracht (in Fig.3 nach rechts geschoben), so dass das dritte Zahnrad 54 (Losrad) drehfest mit der Zwischenwelle 18 gekoppelt ist. Bei einem Antrieb der elektrischen Maschine 12 wird somit ein Drehmoment von der Eingangswelle 16 über die dritte Stirnradstufe 50 der zweiten Schaltstufe 28 auf die Zwischenwelle 18 übertragen. Über die vierte Stirnradstufe 70 wird schließlich die Ausgangswelle 22 angetrieben.

Wie oben erläutert, würde sich bei bei identischer Drehrichtung der elektrischen Maschine 12 bzw. der Eingangswelle 16 an sich in der ersten Schaltstufe 26 und der zweiten Schaltstufe 28 eine umgekehrte Drehrichtung der Ausgangswelle 22 ergeben. Dies kann dadurch vermieden werden, indem die elektrische Maschine 12 derart eingerichtet ist, dass diese in der ersten Schaltstufe 26 in einer anderen Drehrichtung angetrieben wird als in der zweiten Schaltstufe 28 (vgl. Fig.2 und 3), wie oben erläutert.

Zusammenfassend stellt Kern der Erfindung die Verwendung einer vorgeschlagenen Antriebsanordnung 10 als bzw. in einer elektrischen Achse (E-Achse) eines Fahrzeugs unter der Berücksichtigung der umgekehrten Drehrichtungen und der Nutzung der Umkehr der Drehrichtung der elektrischen Maschine zum Ausgleich dar.

Die vorgeschlagenen Antriebsanordnung 10 ermöglicht die Darstellung völlig neuer Übersetzungskombinationen in beiden Schaltstufen bzw. Gängen (bspw. einen extrem hochübersetzten Kriech-Gang für Geländefahrzeuge oder zum Betrieb schwerer Anhänger). Etwaige Verluste sind, wenn überhaupt, nur unwesentlich höher als bei herkömmlichen einstufigen Stirnradgetrieben. Zudem erlaubt die vorgeschlagenen Antriebsanordnung 10 eine kostengünstigere Ausgestaltung als vergleichsweise komplexe Planetengetriebe.

## Patentansprüche

1. Antriebsanordnung (10), insbesondere für ein Fahrzeug, mit einer elektrischen Maschine (12) und einem zweistufigen Stirnradgetriebe (14), welches eine Eingangswelle (16), eine Zwischenwelle (18) und eine Seitenwelle (20) aufweist, wobei die elektrische Maschine (12) mit der Eingangswelle (16) verbunden ist, so dass diese durch die elektrische Maschine (12) angetrieben werden kann, wobei die Eingangswelle (16), die Zwischenwelle (18) und die Seitenwelle (20) über Stirnradstufen (30, 40, 50) getrieblich miteinander gekoppelt sind, wobei eine erste Schaltstufe (26) eine erste Stirnradstufe (30) mit einem ersten Ritzel (32) und einem mit dem ersten Ritzel (32) kämmenden ersten Zahnrad (34) aufweist, wobei das erste Ritzel (32) drehbar oder drehfest mit der Eingangswelle (16) gekoppelt ist und wobei das erste Zahnrad (34) drehfest oder drehbar mit der Seitenwelle (20) gekoppelt ist, wobei die erste Schaltstufe (26) eine zweite Stirnradstufe (40) mit einem zweiten Ritzel (42) und einem mit dem zweiten Ritzel (42) kämmenden zweiten Zahnrad (44) aufweist, wobei das zweite Ritzel (42) drehbar oder drehfest mit der Seitenwelle (20) gekoppelt ist und wobei das zweite Zahnrad (44) drehfest oder drehbar mit der Zwischenwelle (18) gekoppelt ist, wobei eine zweite Schaltstufe (28) eine dritte Stirnradstufe (50) mit einem dritten Ritzel (52) und einem mit dem dritten Ritzel (52) kämmenden dritten Zahnrad (54) aufweist, wobei das dritte Ritzel (52) drehbar oder drehfest mit der Eingangswelle (16) gekoppelt ist und wobei das dritte Zahnrad (54) drehfest oder drehbar mit der Zwischenwelle (18) gekoppelt ist, **dadurch gekennzeichnet, dass** das zweistufige Stirnradgetriebe (14) eine Ausgangswelle (22) aufweist, wobei das Stirnradgetriebe (14) eine vierte Stirnradstufe (70) mit einem vierten Ritzel (72) und einem mit dem vierten Ritzel (72) kämmenden vierten Zahnrad (74) aufweist, wobei das vierte Ritzel (72) drehfest mit der Zwischenwelle (18) gekoppelt ist, wobei das vierte Zahnrad (74) drehfest mit der Ausgangswelle (20) gekoppelt ist, wobei die Eingangswelle (16), die Zwischenwelle (18), die Seitenwelle (20) und die Ausgangswelle über Stirnradstufen (30, 40, 50, 70) derart getrieblich miteinander gekoppelt sind, dass bei einem Antrieb durch die elektrische Maschine (12) in der ersten Schaltstufe (26) die Eingangswelle (16) über die Seitenwelle (20) und die Zwischenwelle (18) ein Drehmoment auf die Ausgangswelle (22) überträgt und dass in der zweiten Schaltstufe (28) die Eingangswelle (16) über die Zwischenwelle (18) ein Drehmoment direkt auf die Ausgangswelle (22) überträgt, wobei auf der Zwischenwelle (18) eine mittels eines Aktuators betätigbare Schalteinrichtung (60) angeordnet ist, wobei mittels der Schalteinrichtung (60) in einer ersten Schaltstellung das zweite Zahnrad (44) drehfest mit der Zwischenwelle (18) koppelbar ist und wobei mittels der Schalteinrichtung (60) in einer zweiten Schaltstellung das dritte Zahnrad (54) drehfest mit der Zwischenwelle (18) koppelbar ist.

2. Antriebsanordnung (10) nach Anspruch 1, **dadurch gekennzeichnet, dass** die Eingangswelle (16) und die Ausgangswelle (22) derart miteinander gekoppelt sind, dass bei einem Antrieb durch die elektrische Maschine (12) in identischer Drehrichtung die Ausgangswelle (22) in der ersten Schaltstufe (26) in einer ersten Drehrichtung angetrieben wird und in der zweiten Schaltstufe (28) entgegengesetzt zur ersten Drehrichtung angetrieben wird.

3. Antriebsanordnung (10) nach Anspruch 1 oder 2, **dadurch gekennzeichnet, dass** die Seitenwelle (20) zwischen der Eingangswelle (16) und der Zwischenwelle (18) oder zwischen der Zwischenwelle (18) und der Ausgangswelle (22) angeordnet ist.

4. Antriebsanordnung (10) nach einem der voranstehenden Ansprüche, **dadurch gekennzeichnet, dass** die elektrische Maschine (12) derart eingerichtet ist, dass diese in der ersten Schaltstufe (26) in einer anderen Drehrichtung angetrieben wird als in der zweiten Schaltstufe (28).

5. Antriebsanordnung (10) nach einem der voranstehenden Ansprüche, **dadurch gekennzeichnet, dass** die Ausgangswelle (22) ein Differential aufweist und/oder dass das Stirnradgetriebe (14) eine Parksperre (80) aufweist, wobei die Parksperre (80) auf der Eingangswelle (16), auf der Zwischenwelle (18) oder auf der Ausgangswelle (22) angeordnet ist.

## Claims

1. Drive assembly (10), in particular for a vehicle, having an electric machine (12) and a two-stage spur gear mechanism (14), which has an input shaft (16), an intermediate shaft (18) and a side shaft (20), wherein the electric machine (12) is connected to the input shaft (16), so that the input shaft can be driven by the electric machine (12), wherein the input shaft (16), the intermediate shaft (18) and the side shaft (20) are coupled to each other in terms of gearing by means of spur gear stages (30, 40, 50), wherein a first shift stage (26) has a first spur gear stage (30) with a first pinion (32) and a first gear (34) meshing with the first pinion (32), wherein the first pinion (32) is rotatably or rotationally fixedly coupled to the input shaft (16) and wherein the first gear (34) is rotationally fixedly or rotatably coupled to the side shaft (20), wherein the first shift stage (26) has a second spur gear stage (40) with a second pinion (42) and a second gear (44) meshing with the second pinion (42), wherein the second pinion (42) is rotatably or rotationally fixedly coupled to the side shaft (20) and wherein the second gear (44) is rotationally fixedly or rotatably coupled to the intermediate shaft (18), wherein a second shift stage (28) has a third spur gear stage (50) with a third pinion (52) and a third gear (54) meshing with the third pinion (52), wherein the third pinion (52) is rotatably or rotationally fixedly coupled to the input shaft (16) and wherein the third gear (54) is rotationally fixedly or rotatably coupled to the intermediate shaft (18), **characterized in that** the two-stage spur gear mechanism (14) has an output shaft (22), wherein the spur gear mechanism (14) has a fourth spur gear stage (70) with a fourth pinion (72) and a fourth gear (74) meshing with the fourth pinion (72), wherein the fourth pinion (72) is rotationally fixedly coupled to the intermediate shaft (18), wherein the fourth gear (74) is rotationally fixedly coupled to the output shaft (20), wherein the input shaft (16), the intermediate shaft (18), the side shaft (20) and the output shaft are coupled to each other in terms of gearing by means of spur gear stages (30, 40, 50, 70) in such a way that, during driving by the electric machine (12), in the first shift stage (26) the input shaft (16) transmits torque to the output shaft (22) via the side shaft (20) and the intermediate shaft (18), and **in that** in the second shift stage (28) the input shaft (16) transmits torque directly to the output shaft (22) via the intermediate shaft (18), wherein a switching device (60) which can be actuated by means of an actuator is arranged on the intermediate shaft (18), wherein the second gear (44) can be rotationally fixedly coupled to the intermediate shaft (18) by means of the switching device (60) in a first switching position and wherein the third gear (54) can be rotationally fixedly coupled to the intermediate shaft (18) by means of the switching device (60) in a second switching position.

2. Drive assembly (10) according to Claim 1, **characterized in that** the input shaft (16) and the output shaft (22) are coupled to each other in such a way that, during driving by the electric machine (12) in the same direction of rotation, the output shaft (22) is driven in a first direction of rotation in the first shift stage (26) and is driven in the opposite direction to the first direction of rotation in the second shift stage (28).

3. Drive assembly (10) according to Claim 1 or 2, **characterized in that** the side shaft (20) is arranged between the input shaft (16) and the intermediate shaft (18) or between the intermediate shaft (18) and the output shaft (22).

4. Drive assembly (10) according to any of the preceding claims, **characterized in that** the electric machine (12) is designed in such a way that it is driven in a different direction of rotation in the first shift stage (26) than in the second shift stage (28).

5. Drive assembly (10) according to any of the preceding claims, **characterized in that** the output shaft (22) has a differential, and/or **in that** the spur gear mechanism (14) has a parking lock (80), wherein the parking lock (80) is arranged on the input shaft (16), on the intermediate shaft (18) or on the output shaft (22).

## Revendications

1. Arrangement d'entraînement (10), notamment pour un véhicule, comprenant une machine électrique (12) et un engrenage à pignon droit à deux étages (14), lequel possède un arbre d'entrée (16), un arbre intermédiaire (18) et un arbre latéral (20), la machine électrique (12) étant reliée à l'arbre d'entrée (16), de sorte que celui-ci peut être entraîné par la machine électrique (12), l'arbre d'entrée (16), l'arbre intermédiaire (18) et l'arbre latéral (20) étant couplés en entraînement les uns aux autres par le biais d'étages à pignon droit (30, 40, 50), un premier rapport (26) présentant un premier étage à pignon droit (30) avec un premier pignon (32) et une première roue dentée (34) qui s'engrène avec le premier pignon (32), le premier pignon (32) étant couplé de manière rotative ou en rotation solidaire avec l'arbre d'entrée (16) et la première roue dentée (34) étant couplée de manière rotative ou en rotation solidaire avec l'arbre latéral (20), le premier rapport (26) présentant un deuxième étage à pignon droit (40) avec un deuxième pignon (42) et une deuxième roue dentée (44) qui s'engrène avec le deuxième pignon (42), le deuxième pignon (42) étant couplé de manière rotative ou en rotation solidaire avec l'arbre latéral (20) et la deuxième roue dentée (44) étant couplée de manière rotative ou en rotation solidaire avec l'arbre intermédiaire (18), un deuxième rapport (28) présentant un troisième étage à pignon droit (50) avec un troisième pignon (52) et une troisième roue dentée (54) qui s'engrène avec le troisième pignon (52), le troisième pignon (52) étant couplé de manière rotative ou en rotation solidaire avec l'arbre d'entrée (16) et la troisième roue dentée (54) étant couplée de manière rotative ou en rotation solidaire avec l'arbre intermédiaire (18), **caractérisé en ce que** l'engrenage à pignon droit à deux étages (14) possède un arbre de sortie (22), l'engrenage à pignon droit (14) possédant un quatrième étage à pignon droit (70) avec un quatrième pignon (72) et une quatrième roue dentée (74) qui s'engrène avec le quatrième pignon (72), le quatrième pignon (72) étant couplé en rotation solidaire avec l'arbre intermédiaire (18), la quatrième roue dentée (74) étant couplée en rotation solidaire avec l'arbre de sortie (20), l'arbre d'entrée (16), l'arbre intermédiaire (18), l'arbre latéral (20) et l'arbre de sortie étant couplés en entraînement les uns aux autres par le biais d'étages à pignon droit (30, 40, 50, 70) de telle sorte que lors d'un entraînement par la machine électrique (12), dans le premier rapport (26), l'arbre d'entrée (16) transmet un couple à l'arbre de sortie (22) par le biais de l'arbre latéral (20) et de l'arbre intermédiaire (18), et que, dans le deuxième rapport (28), l'arbre d'entrée (16) transmet un couple directement à l'arbre de sortie (22) par le biais de l'arbre intermédiaire (18), un dispositif de changement de rapport (60) pouvant être actionné au moyen d'un actionneur étant disposé sur l'arbre intermédiaire (18), la deuxième roue dentée (44) pouvant être couplée en rotation solidaire avec l'arbre intermédiaire (18) au moyen du dispositif de changement de rapport (60) dans une première position de commutation, et la troisième roue dentée (54) pouvant être couplée en rotation solidaire avec l'arbre intermédiaire (18) au moyen du dispositif de changement de rapport (60) dans une deuxième position de commutation.

2. Arrangement d'entraînement (10) selon la revendication 1, **caractérisé en ce que** l'arbre d'entrée (16) et l'arbre de sortie (22) sont couplés l'un à l'autre de telle sorte que, lors d'un entraînement par la machine électrique (12) dans un sens de rotation identique, l'arbre de sortie (22), dans le premier rapport (26), est entraîné dans un premier sens de rotation et, dans le deuxième rapport (28), est entraîné dans le sens opposé au premier sens de rotation.

3. Arrangement d'entraînement (10) selon la revendication 1 ou 2, **caractérisé en ce que** l'arbre latéral (20) est disposé entre l'arbre d'entrée (16) et l'arbre intermédiaire (18) ou entre l'arbre intermédiaire (18) et l'arbre de sortie (22).

4. Arrangement d'entraînement (10) selon l'une des revendications précédentes, **caractérisé en ce que** la machine électrique (12) est conçue de telle sorte que, dans le premier rapport (26), celle-ci elle est entraînée dans un sens de rotation différent que dans le deuxième rapport (28).

5. Arrangement d'entraînement (10) selon l'une des revendications précédentes, **caractérisé en ce que** l'arbre de sortie (22) possède un différentiel et/ou **en ce que** l'engrenage à pignon droit (14) possède un blocage de stationnement (80), le blocage de stationnement (80) étant disposé sur l'arbre d'entrée (16), sur l'arbre intermédiaire (18) ou sur l'arbre de sortie (22).
